# EUROPEAN PATENT APPLICATION

(11) **EP 4 480 738 A1**
(43) Date of publication of application: **25.12.2024**
(21) Application number: 23781306.8
(22) Date of filing: 28.03.2023
(51) Int. Cl.: B60L 53/12, B60L 53/10, H02J 50/00

(54) **WIRELESS POWER TRANSFER APPARATUS AND METHOD COMPRISING COIL STRUCTURE FOR WIRELESS POWER TRANSFER**

(30) Priority: 28.03.2022 KR 20220038288
(71) Applicant: Hyundai Motor Company, Seoul 06797 (KR); Kia Corporation, Seocho-gu Seoul 06797 (KR)
(72) Inventor: CHI, Soung Hwan, Hwaseong-si, Gyeonggi-do 18280 (KR); SEONG, Jae Yong, Hwaseong-si, Gyeonggi-do 18280 (KR); LEE, Min Byeong, Hwaseong-si, Gyeonggi-do 18280 (KR)
(74) Representative: Isarpatent
(86) International application number: PCT/KR2023/004112
(87) International publication number: WO 2023/191451

(57) **Abstract**

Disclosed is a wireless power transfer pad prepared to transfer wireless power to a reception pad, comprising a secondary coil. The wireless power transfer pad comprises three primary coils and a housing supporting the primary coils. The center of gravity of a center point of each of the three primary coils is arranged at the reference point.

## Description

### TECHNICAL FIELD

The present disclosure relates to a wireless power transmission device/pad and a wireless power reception device/pad for wireless power transfer (WPT), and a wireless power transfer method using the wireless power transmission device/pad and the wireless power reception device/pad. More particularly, the present disclosure relates to a coil structure ensuring a compatibility between various transmission and reception devices and improving a power transfer efficiency during the wireless power transfer, and a wireless power transfer method using the coil structure.

### BACKGROUND ART

An electric vehicle (EV) is driven by an electric motor by power stored in a battery, and produces less pollution such as exhaust gas and noise compared with a conventional gasoline engine vehicle, and have advantages of fewer faults, a longer life span, and simplified driving operations.

The EVs may be classified into hybrid electric vehicles (HEVs), plug-in hybrid electric vehicles (PHEVs), and electric vehicles (EVs) based on a driving power source. The HEV has an engine as a main power source and a motor as an auxiliary power source. The PHEV has a motor and a battery as a main power source and an engine that is used when the battery is discharged. The EV has a motor but does not have an engine.

An electric vehicle charging system may be defined as a system that charges the battery mounted in the electric vehicle using electric power obtained from a commercial power grid or stored in an energy storage device. Such an electric vehicle charging system may have various forms depending on a type of the electric vehicle. For example, the electric vehicle charging system may include a conductive charging system using a cable or a non-contact wireless power transfer system.

During a charging session, a reception pad of a vehicle assembly (VA) mounted on the electric vehicle may form an inductive resonance coupling with a transmission pad of a ground assembly (GA) installed at a charging station or a charging spot and may charge the battery of the EV using electric power transferred from the ground assembly through the inductive resonance coupling.

Meanwhile, structures of the transmission pad and the reception pad may be critical factors for ensuring a high power transfer efficiency in the magnetic resonance type wireless power transfer system. In particular, in a typical configuration of the transmission pad or the reception pad including a ferrite structure facilitating the wireless power transfer and a coil wound around the ferrite structure, the power transfer efficiency may vary depending on the ferrite structure and/or a structure of the coil.

Accordingly, there is a need for a coil structure that may improve the power transfer efficiency in the wireless power transfer system.

### DISCLOSURE OF INVENTION

### TECHNICAL PROBLEM

In general, structures and shapes of coils used for wireless power transfer of electric vehicles including the sizes and a single-phase or three-phase induction scheme may be determined according to the charging capacity. In a conventional wireless power transfer system, a vehicular assembly (VA) system needs to be matched with an appropriate ground assembly (GA) system depending on the type and the charging capacity of the VA system.

In particular, the single-phase induction coil suitable for a low-capacity wireless charging and the three-phase induction coil preferable for a high-capacity wireless charging usually have different shapes from each other and generate quite different magnetic field distributions for normal operations. As a result, the single-phase induction coil may be incompatible with the three-phase induction coil, and a plurality of chargers have to be prepared separately in the charging station to provide the charging service to the vehicles equipped with the single-phase induction coil and the three-phase induction coil, respectively.

To solve the above problems, one objective of the present disclosure is to provide a hybrid charging coil structure which can selectively generate a magnetic field distribution pattern of the single-phase coil for the low-capacity wireless charging or a magnetic field distribution pattern of the three-phase coil for the high-capacity wireless charging based on a single hardware.

Another objective of the present disclosure is to provide a primary coil structure for the wireless power transfer that is highly compatible with a case where a secondary coil on the vehicle supports only the single-phase operation, a case where the secondary coil supports only the three-phase operation, and a case where the secondary coil supports both the single-phase operation and the three-phase operation.

Another objective of the present disclosure is to provide a secondary coil structure for the wireless power transfer that is highly compatible with a case where a primary coil in the charging station supports only the single-phase operation, a case where the primary coil supports only the three-phase operation, and a case where the primary coil supports both the single-phase operation and the three-phase operation.

Another objective of the present disclosure is to provide a primary/secondary coil structure operable selectively in a single-phase operation mode and a three-phase operation mode based on a phase of input power applied to the primary coil and in consideration of the charging capacity, and a wireless power transfer method using the coil structure.

Another objective of the present disclosure is to provide a wireless power transfer device having an optimized arrangement of a novel coil structure and showing a high power transfer efficiency.

### TECHNICAL SOLUTION

According to an aspect of an exemplary embodiment, a wireless power transmission pad provided to transmit electric power wirelessly to a power reception pad including a secondary coil, includes: a first primary coil arranged to surround a first center near a reference point (for example, an origin) in a central space; a second primary coil arranged to surround a second center near the reference point in the central space; a third primary coil arranged to surround a third center near the reference point in the central space; and a housing configured to support the first primary coil, the second primary coil, and the third primary coil. The first primary coil, the second primary coil, and the third primary coil are disposed such that a center of gravity of the first center, the second center, and the third center is located at the reference point.

The first primary coil, the second primary coil, and the third primary coil may be arranged within a circle centered on the reference point and serving as a design guideline.

The first primary coil, the second primary coil, and the third primary coil may be arranged such that a maximum of two coils overlap in a z-axis direction at any point on a xy-plane passing through the first center, the second center, and the third center.

Each of the first primary coil, the second primary coil, and the third primary coil may be formed with a flat wire wound by at least one turn.

Each of the first primary coil, the second primary coil, and the third primary coil may be formed with a litz wire wound by at least one turn.

The first primary coil, the second primary coil, and the third primary coil may be controlled to perform a single-phase operation or a three-phase operation depending on phase differences of input power between the first through the third primary coils.

The first primary coil, the second primary coil, and the third primary coil may be controlled to perform the single-phase operation when input power of a same phase is applied to each of the first through the third primary coils.

The wireless power transmission pad as claimed in claim 6, wherein the first primary coil, the second primary coil, and the third primary coil may be controlled to perform the three-phase operation input powers having a certain phase difference are applied to each of the first through the third primary coils.

The first primary coil, the second primary coil, and the third primary coil may be controlled to perform a single-phase operation or a three-phase operation based on an operation mode allowed in the secondary coil of the power reception pad.

When the secondary coil of the power reception pad includes a first secondary coil, a second secondary coil, and a third secondary coil, the first secondary coil, the second secondary coil, and the third secondary coil may be disposed such that a center of gravity of a fourth center of the first secondary coil, a fifth center of the second secondary coil, and a sixth center of the third secondary coil may be located on a central axis that is perpendicular to a xy-plane passing through the first center, the second center, and the third center and passes through the reference point.

According to another aspect of an exemplary embodiment, a wireless power reception pad provided to receive electric power wirelessly from a power transmission pad including a primary coil, includes: a first secondary coil arranged to surround a fourth center near a reference point in a central space; a second secondary coil arranged to surround the fifth center near the reference point in the central space; a third secondary coil arranged to surround the sixth center near the reference point in the central space; and a housing configured to support the first secondary coil, the second secondary coil, and the third secondary coil. The first secondary coil, the second secondary coil, and the third secondary coil are disposed such that a center of gravity of the fourth center, the fifth center, and the sixth center is located at the reference point.

The first secondary coil, the second secondary coil, and the third secondary coil may be arranged within a circle centered on the reference point and serving as a design guideline.

The first secondary coil, the second secondary coil, and the third secondary coil may be arranged such that a maximum of two coils overlap in a z-axis direction at any point on a xy-plane passing through the fourth center, the fifth center, and the sixth center.

Each of the first secondary coil, the second secondary coil, and the third secondary coil may be formed with a flat wire wound by at least one turn.

Each of the first secondary coil, the second secondary coil, and the third secondary coil may be formed with a litz wire wound by at least one turn.

According to another aspect of an exemplary embodiment, provided is a method of transferring electric power wirelessly from a transmission pad comprising a primary coil to a power reception pad comprising a secondary coil. The method includes: providing a first primary coil arranged to surround a first center near a reference point in a central space, a second primary coil arranged to surround a second center near the reference point in the central space, and a third primary coil arranged to surround a third center near the reference point in the central space such that a center of gravity of the first center, the second center, and the third center is located at the origin; and controlling supply of input powers to the first primary coil, the second primary coil, and the third primary coil to enable a wireless power transfer to the power reception pad by a single-phase operation or a three-phase operation.

The operation of controlling supply of input powers may include: enabling input powers of a same phase to be supplied to the first primary coil, the second primary coil, and the third primary coil, so that the wireless power transfer to the power reception pad is performed by the single-phase operation.

The operation of controlling supply of input powers may include: enabling input powers having certain phase differences from each other to be supplied to respective one of the first primary coil, the second primary coil, and the third primary coil, so that the wireless power transfer to the power reception pad is performed by the three-phase operation.

In the operation of controlling the supply of the input powers, the supply of the input powers may be controlled such that the first primary coil, the second primary coil, and the third primary coil perform the wireless power transfer to the power reception pad by the single-phase operation or the three-phase operation based on an operation mode allowed in the secondary coil of the power reception pad.

When the secondary coil of the power reception pad includes the first secondary coil, the second secondary coil, and the third secondary coil, the method further includes: providing a first secondary coil, a second secondary coil, and a third secondary coil such that a center of gravity of a fourth center of the first secondary coil, a fifth center of the second secondary coil, and a sixth center of the third secondary coil is located on a central axis that is perpendicular to a xy-plane passing through the first center, the second center, and the third center and passes through the reference point.

### ADVANTAGEOUS EFFECTS

According to an exemplary embodiment of the present disclosure, manufacturers of the wireless power transfer system can reduce manufacturing costs of the system by unifying the shapes of the wireless charging coil that had to be prepared in multiple numbers according to the charging capacity and/or the operation mode, and the operators of the wireless power transfer system can also reduce installation costs and maintenance costs of the system accordingly.

Exemplary embodiments of the present disclosure may contribute to an increase in the number of charging stations, thereby alleviating inconveniences of EV users who had to choose or find a charging station, reducing psychological resistances to the wireless charging, and lowering an entry barrier to purchase the electric vehicle.

According to an exemplary embodiment of the present disclosure, provided is a highly compatible transmission/reception coil device that is compatible with a conventional coil device no matter on which side of the primary coil of the charging station and the secondary coil of the vehicle side the coil structure is installed.

According to an exemplary embodiment of the present disclosure, provided are a primary/secondary coil structure operable selectively in the single-phase operation mode and the three-phase operation mode based on the phase of the input power applied to the primary coil and in consideration of the charging capacity, and a wireless power transfer method using the coil structure.

According to an exemplary embodiment of the present disclosure, provided is a wireless power transfer device having an optimized arrangement of the novel coil structure and showing a high power transfer efficiency.

### DESCRIPTION OF DRAWINGS

FIG. 1 is an illustration of a wireless power transfer system to which an exemplary embodiment of the present disclosure is applicable;
FIGS. 2 and 3 illustrate a Cartesian coordinate system compatible with a definition in SAE J2954 standard and applicable to an embodiment of the present disclosure;
FIG. 4 is a circuit diagram of an equivalent circuit of an electric vehicle wireless charging circuit according to an exemplary embodiment of the present disclosure;
FIG. 5 shows an equivalent circuit of a single-phase to single-phase wireless power transfer (WPT) system according to an exemplary embodiment of the present disclosure;
FIG. 6 is a conceptual cross sectional view and an elevation view of a power transmission pad according to an exemplary embodiment of the present disclosure;
FIG. 7 shows an equivalent circuit of a three-phase to three-phase WPT system according to an exemplary embodiment of the present disclosure;
FIG. 8 is a conceptual top view of a power transmission coil and a power reception coil coupled to each other for a three-phase to three-phase power transfer operation according to an exemplary embodiment of the present disclosure;
FIG. 9 is a conceptual top view of a coil device according to an exemplary embodiment of the present disclosure that may be used as the power transmission coil and/or the power reception coil for the wireless power transfer and compatible with a three-phase operation mode and a single-phase operation mode according to an exemplary embodiment of the present disclosure;
FIG. 10 is a conceptual perspective view of the coil device of FIG. 9;
FIG. 11 is a conceptual perspective view of a power transmission coil and a power reception coil coupled to each other and compatible with the three-phase operation mode and the single-phase operation mode for the power transfer according to an exemplary embodiment of the present disclosure;
FIG. 12 is a flowchart conceptually illustrating a wireless power transfer method according to an exemplary embodiment of the present disclosure;
FIG. 13 is a flowchart conceptually illustrating a wireless power transfer method according to another exemplary embodiment of the present disclosure; and
FIG. 14 is a block diagram illustrating a generalized configuration of hardware included in the wireless power transmission pad and/or the wireless power reception pad or associated with the wireless power transmission pad and/or the wireless power reception pad to control a sequence for the wireless power transfer.

### BEST MODE

For a clearer understanding of the features and advantages of the present disclosure, exemplary embodiments of the present disclosure will be described in detail with reference to the accompanied drawings. However, it should be understood that the present disclosure is not limited to particular embodiments disclosed herein but includes all modifications, equivalents, and alternatives falling within the spirit and scope of the present disclosure. In the drawings, similar or corresponding components may be designated by the same or similar reference numerals.

The terminologies including ordinals such as "first" and "second" designated for explaining various components in this specification are used to discriminate a component from the other ones but are not intended to be limiting to a specific component. For example, a second component may be referred to as a first component and, similarly, a first component may also be referred to as a second component without departing from the scope of the present disclosure. As used herein, the term "and/or" may include a presence of one or more of the associated listed items and any and all combinations of the listed items.

In the description of exemplary embodiments of the present disclosure, "at least one of A and B" may mean "at least one of A or B" or "at least one of combinations of one or more of A and B". In addition, in the description of exemplary embodiments of the present disclosure, "one or more of A and B" may mean "one or more of A or B" or "one or more of combinations of one or more of A and B".

When a component is referred to as being "connected" or "coupled" to another component, the component may be directly connected or coupled logically or physically to the other component or indirectly through an object therebetween. Contrarily, when a component is referred to as being "directly connected" or "directly coupled" to another component, it is to be understood that there is no intervening object between the components. Other words used to describe the relationship between elements should be interpreted in a similar fashion.

The terminologies are used herein for the purpose of describing particular exemplary embodiments only and are not intended to limit the present disclosure. The singular forms include plural referents as well unless the context clearly dictates otherwise. Also, the expressions "comprises," "includes," "constructed," "configured" are used to refer a presence of a combination of stated features, numbers, processing steps, operations, elements, or components, but are not intended to preclude a presence or addition of another feature, number, processing step, operation, element, or component.

Unless defined otherwise, all terms used herein, including technical or scientific terms, have the same meaning as commonly understood by those of ordinary skill in the art to which the present disclosure pertains. Terms such as those defined in a commonly used dictionary should be interpreted as having meanings consistent with their meanings in the context of related literatures and will not be interpreted as having ideal or excessively formal meanings unless explicitly defined in the present application.

Meanwhile, one or more conventional components may be included in a configuration of the present disclosure if necessary, and such components will be described herein to an extent that it does not obscure the technical idea and concept of the present disclosure. If the description of the conventional components may obscure the technical idea and concept of the present disclosure, however, detailed description of such components may be omitted for simplicity.

Terms used in the present disclosure are defined as follows.

"Electric Vehicle (EV)": An automobile, as defined in 49 CFR 523.3, intended for highway use, powered by an electric motor that draws current from an on-vehicle energy storage device, such as a battery, which is rechargeable from an off-vehicle source, such as residential or public electric service or an on-vehicle fuel powered generator.

The EV may include an electric vehicle, an electric automobile, an electric road vehicle (ERV), a plug-in vehicle (PV), an electromotive vehicle (xEV), etc., and the xEV may be classified into a plug-in all-electric vehicle (BEV), a battery electric vehicle, a plug-in electric vehicle (PEV), a hybrid electric vehicle (HEV), a hybrid plug-in electric vehicle (HPEV), a plug-in hybrid electric vehicle (PHEV), etc.

"Plug-in Electric Vehicle (PEV)": An Electric Vehicle that recharges the on-vehicle primary battery by connecting to the power grid.

"Plug-in vehicle (PV)": An electric vehicle rechargeable via wireless charging from an electric vehicle supply equipment (EVSE) without using a physical plug or a physical socket.

"Heavy duty vehicle (H.D. Vehicle)": Any four-or more wheeled vehicle as defined in 49 CFR 523.6 or 49 CFR 37.3 (bus).

"Light duty plug-in electric vehicle": A three or four-wheeled vehicle propelled by an electric motor drawing current from a rechargeable storage battery or other energy devices for use primarily on public streets, roads and highways and rated at less than 4,545 kg gross vehicle weight.

"Wireless power charging system (WCS)": A system for wireless power transfer and control of interactions including operations for an alignment and communications between a supply device (or ground assembly) and an EV device (or vehicle assembly).

"Wireless power transfer (WPT)": A transfer of electric power between a power source such as a utility, the power grid, an energy storage device, a fuel cell generator and the EV through a contactless channel such as electromagnetic induction and resonance.

"Utility": A set of systems which supply electrical energy and include a customer information system (CIS), an advanced metering infrastructure (AMI), rates and revenue system, etc. The utility may provide an EV with energy through rates table and discrete events. Also, the utility may provide information related to certification on EVs, interval of power consumption measurements, and tariff.

"Smart charging": A system in which EVSE and/or EV (including the PEV, or PHEV) communicate with power grid to optimize charging ratio or discharging ratio of EV by reflecting capacity of the power grid or expense of use.

"Automatic charging": A procedure in which inductive charging is automatically performed after a vehicle is located in a proper position corresponding to a primary charger assembly which may transfer power by a conductive or inductive charging. The automatic charging may be performed after obtaining necessary authentication and right.

"Interoperability": A state in which components of a system interwork with corresponding components of the system to perform operations aimed by the system. Additionally, information interoperability may refer to capability that two or more networks, systems, devices, applications, or components may efficiently share and easily use information without causing inconvenience to users.

"Inductive charging system": A system transferring energy from a power source to an EV via a two-part gapped core transformer in which the two halves of the transformer, i.e., primary and secondary coils, are physically separated from one another. In the present disclosure, the inductive charging system may correspond to an EV power transfer system.

"Inductive coupler": A transformer formed by the primary coil in the primary device or a ground assembly (GA) and the secondary coil in the secondary device or a vehicle assembly (VA) that allows power to be transferred through electric isolation.

"Inductive coupling": A magnetic coupling between two coils. One of the two coils may refer to a primary coil or GA coil, and the other one of the two coils may refer to a secondary coil or vehicle assembly VA coil.

"Supply Power Circuit (SPC) or "Ground assembly (GA)": An assembly disposed on a primary device or the ground assembly or an infrastructure side including the primary coil (or GA coil) and other components. The other components may include at least one part to control the impedance and resonant frequency, a ferrite enforcing the magnetic path, and electromagnetic shielding materials. For example, the SPC or GA may include a power/frequency conversion unit and a SPC controller (or GA controller) necessary to function as a power source of a wireless power charging system, a wiring from the grid, and wirings between each unit, filtering circuits, and a housing.

"EV power circuit (EVPC)" or "Vehicle assembly (VA)": An assembly mounted on the vehicle including the secondary coil (or VA Coil) and other components. The other components may include at least one part to control the impedance and resonant frequency, a ferrite enforcing the magnetic path, and electromagnetic shielding materials. For example, the EVPC or VA may include a power/frequency conversion unit and a EVPC controller (or VA controller) necessary to as the vehicle part of a wireless power charging system, wiring to the vehicle batteries, and wirings between each unit, filtering circuits, and a housing.

The SPC may be referred to as or identified by the ground assembly (GA) or the like. Similarly, the EVPC may be referred to as or identified by the vehicle assembly (VA) or the like.

The GA may be referred to as the primary device, or the like, and the VA may be referred to as the EV device, the secondary device, or the like.

The GA may be referred to as the supply device, a power supply side device, or the like, and the VA may be referred to as the EV device, an EV side device, or the like.

"Primary device": An apparatus providing the contactless coupling to the secondary device. In other words, the primary device may be an apparatus external to an EV. When the EV is receiving power, the primary device may operate as the source of the power to be transferred. The primary device may include the housing and all covers.

"Secondary device": An apparatus mounted on the EV providing the contactless coupling to the primary device. In other words, the secondary device may be provided within the EV. When the EV is receiving power, the secondary device may transfer the power from the primary device to the EV. The secondary device may include the housing and all covers.

"Supply Power Electronics" indicates a portion of the SPC or GA regulating an output power level of the primary coil (or GA Coil) based on information from the vehicle. "EV Power Electronics" indicates a portion of the EVPC or VA monitoring specific on-vehicle parameters during the charging and initiating communications with the EVPC or GA to facilitate the adjustment of the output power level.

The Supply Power Electronics may be referred to as GA electronics, a GA controller, or a primary device communication controller (PDCC), and the EV Power Electronics may be referred to as VA electronics, a VA controller, or an electric vehicle communication controller (EVCC).

"Magnetic gap": A vertical distance between the plane of the higher of the top of the litz wire or the top of the magnetic material in the primary coil/GA Coil to the plane of the lower of the bottom of the litz wire or the magnetic material in the secondary coil/VA Coil when aligned.

"Ambient temperature": A ground-level temperature of the air measured at a subsystem under consideration and not in direct sun light.

"Vehicle ground clearance": A vertical distance between a ground surface and a lowest part of a vehicle floor pan.

"Vehicle magnetic ground clearance": A vertical distance between the plane of the lower of the bottom of the litz wire or the magnetic material in the secondary coil or VA Coil mounted on the vehicle to the ground surface.

"Secondary coil surface distance" or "VA coil magnetic surface distance": A distance between a plane of a nearest magnetic or conducting component surface to a lower external surface of the secondary coil or VA coil when mounted. Such a distance may include any protective coverings and additional items which may be packaged in the secondary coil or VA coil enclosure.

The secondary coil may be referred to as the VA coil, a vehicle coil, or a receiver coil. Similarly, the primary coil may be referred to as the GA coil or a transmit coil.

"Exposed conductive component": A conductive component of electrical equipment (e.g., an electric vehicle) that may be touched, and is not normally energized but may become energized when a fault occurs.

"Hazardous live component": A five component which, under certain conditions, may generate a harmful electric shock.

"Live component": Any conductor or conductive component intended to be electrically energized in normal use.

"Direct contact": A contact of a person with a live component. See IEC 61140 standard.

"Indirect contact": A contact of a person with exposed, conductive, and energized components made live by an insulation failure. See IEC 61140 standard.

"Alignment": A process of finding a relative position of the secondary device with respect to the primary device and/or a relative position of the primary device with respect to the secondary device for an efficient power transfer. In the present disclosure, the alignment may be directed to the alignment in the wireless power transfer system but may not be limited thereto.

"Pairing": A process of associating the vehicle (EV) with a single dedicated supply device (primary device) disposed such that the power transfer may occur. The pairing may include a process of associating the EVPC or VA controller with the SPC or GA controller of the charging spot.

The correlation or association process may include a process of establishing a relationship between two peer communication entities.

"Command and control communications": Communications for exchanging information required for starting, controlling, and ending the wireless power transfer process between an electric vehicle supply equipment and an electric vehicle.

"High-level communication (HLC)": A digital communication capable of handling all information not covered by the command and control communications. The data link of the HLC may use a power line communication (PLC) but is not limited thereto.

"Low-power excitation (LPE)": A technique of activating the supply device (or primary device) for the fine positioning and pairing so that the EV may detect the supply device, and vice versa.

"Service set identifier (SSID)": A unique identifier including 32-characters attached to a header of a packet transmitted on a wireless LAN. The SSID identifies the basic service set (BSS) to which the wireless device attempts to connect. The SSID distinguishes multiple wireless LANs. Therefore, all access points (APs) and all terminal/station devices that want to use a specific wireless LAN may use the same SSID. Devices that do not use a unique SSID are not able to join the BSS. Because the SSID is shown as plain text, the SSID may not provide any security features to the network.

"Extended service set identifier (ESSID)": A name of the network to which one desires to connect. ESSID is similar to SSID but a more extended concept.

"Basic service set identifier (BSSID)": BSSID including 48bits is used to distinguish a specific BSS. With an infrastructure BSS network, the BSSID may be configured for medium access control (MAC) of the AP equipment. For an independent BSS or Ad-hoc network, the BSSID may be generated with any value.

The charging station may include at least one GA and at least one GA controller configured to manage the at least one GA. The GA may include at least one wireless communication device. The charging station may refer to a place or location including at least one GA, which is provided in home, office, public place, road, parking area, etc.

In the present specification, "association" may be used as a term representing a procedure for establishing wireless communication between the electric vehicle communication controller (EVCC) and the supply equipment communication controller (SECC) controlling the charging infrastructure.

The electric vehicle charging system may include a conductive charging system using a cable or a non-contact wireless power transfer system, but is not limited thereto. The electric vehicle charging system may be defined as a system that charges the battery mounted in the electric vehicle using electric power obtained from a commercial power grid or stored in an energy storage device and may have various forms depending on a type of the electric vehicle.

SAE TIR J2954 standard, which is one of the most representative industrial standards for wireless charging, establishes industry-standard specification guidelines that define acceptable criteria for interoperability, electromagnetic compatibility, minimum performance, safety and testing for wireless charging of light-duty electric and plug-in electric vehicles.

As an example of the wireless charging system, the wireless charging system (WCS) according to the J2954 standard may include a grid interface, a high frequency power inverter, power transfer coils, a filter, a rectifier, an optional regulator, and communication circuits between the vehicle energy charging/storage system and a grid connected power inverter. The grid interface may be similar to a conventional EVSE connection for single or three-phase AC power.

Exemplary embodiments of the present disclosure will now be described in detail with reference to the accompanying drawings. In the drawings, the same components may be designated by the same reference numerals to facilitate overall understanding of the disclosure, and duplicate descriptions thereof will be omitted for simplicity.

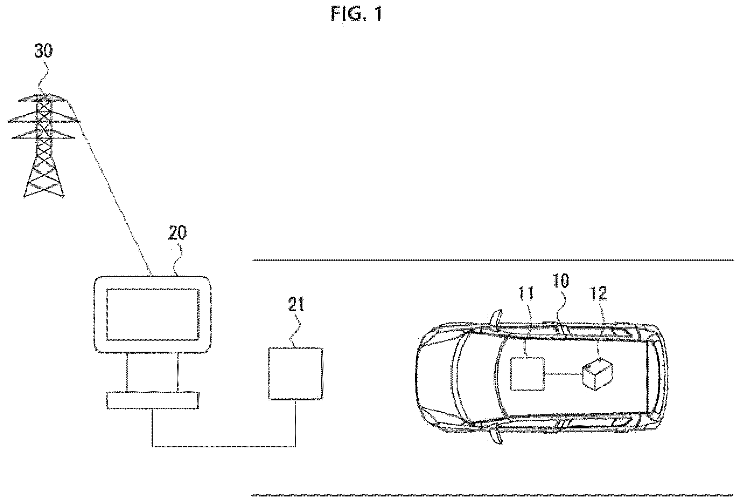

FIG. 1 is an illustration of a wireless power transfer system to which an exemplary embodiment of the present disclosure may be applied.

As shown in FIG. 1, the wireless power transfer may be performed by at least one component of an electric vehicle (EV) 10 and a charging station 20 and may be used for transferring electric power to the EV 10 without any conductive wiring.

The EV 10 according to an exemplary embodiment of the present disclosure may include a hybrid electric vehicle (HEV) having an electric motor as well as an internal combustion engine, and may include not only an automobile but also a motorcycle, a cart, a scooter, and an electric bicycle.

The EV 10 may generally be defined as a vehicle that supplies an electric power derived from a rechargeable energy storage such as a battery 12 to an electric motor in a power train system of the EV 10.

The EV 10 may include a power reception pad 11 having a reception coil suitable for receiving the electric power for charging the battery 12 by the wireless power transfer and may include a plug receptacle or inlet suitable for receiving the electric power for charging the battery 12 by the conductive charging. In particular, the EV 10 configured for conductively charging the battery 12 may be referred to as the plug-in electric vehicle (PEV).

The charging station 20 may be connected to the power grid 30 or a power backbone, and may provide the AC power received from the power grid 30 or the power backbone to a power transmission pad 21 having a transmission coil through a power link.

The charging station 20 may communicate with the power grid 300, or an infrastructure management system or an infrastructure server managing the power grid, and may be configured to perform wireless communications with the EV 10. The wireless communications may be performed through Bluetooth, Zigbee, cellular, wireless local area network (WLAN), or the like.

The charging station 20 may be located at various places including a parking area of the owner's house of the EV 10, a parking lot for charging the EV at a gas station, a parking lot at a shopping center or a workplace, or the like, but is not limited thereto.

The wireless power transfer to the battery 12 of the EV 10 may be performed as follows. First, the power reception pad 11 of the EV 10 is disposed in an energy field over the power transmission pad 21. Then the reception coil in the power reception pad 21 and the transmission coil in the power transmission pad 11 may be coupled to and interact each other. An electromotive force may be induced in the power reception pad 11 as a result of the coupling or the interaction, and the battery 12 may be charged by the induced electromotive force.

The charging station 20 and the power transmission pad 21 as a whole or in part may be referred to as the supply power circuit (SPC) or the ground assembly (GA), of which meaning and function were defined above.

Also, the power reception pad 11 along with all or some of the other internal components of the EV 10 may be referred to as the EV power circuit (EVPC) or the vehicle assembly (VA), of which meaning and function were defined above.

Here, each of the power transmission pad 21 and the power reception pad 11 may be configured as a non-polarized or polarized pad.

The non-polarized pad may have one pole in a center of the pad and an opposite pole around its periphery. In this case, the magnetic flux may be formed to exit from the pole in the center of the pad and return to the pole in the periphery from outside of the pad.

The polarized pad may have two poles arranged symmetrically at opposite positions on the pad. In this case, the magnetic flux may be formed according to the orientation of the pad.

In the present specification, the power transmission pad 21 and the power reception pad 11 may be collectively referred to as wireless charging pads.

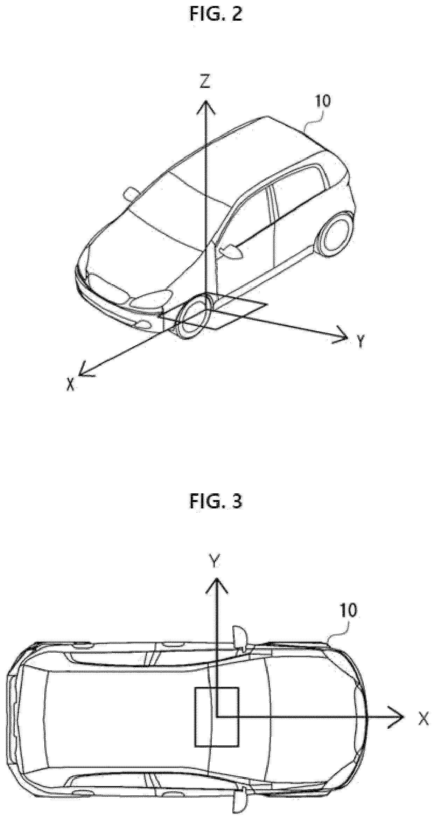

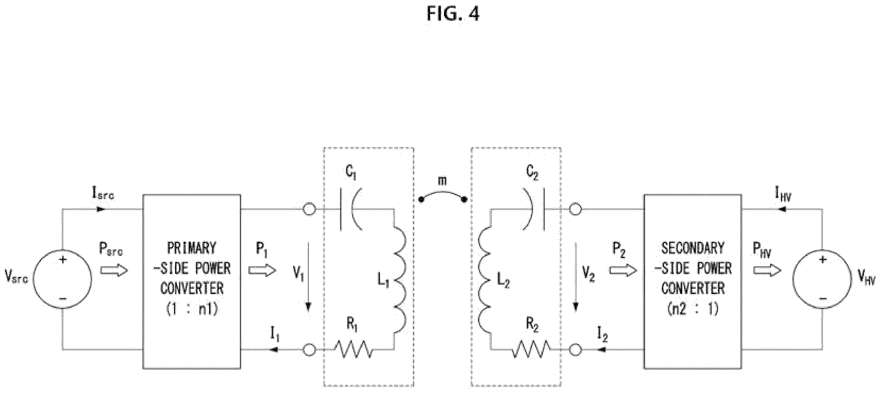

FIGS. 3 and 4 illustrate a Cartesian coordinate system compatible with a definition in the SAE J2954 standard and applicable to an embodiment of the present disclosure.

As shown in FIGS. 2 and 3, in the right-handed Cartesian coordinate system, +X axis may be set to point to the rear of the vehicle, and -X axis may be set to point to the front of the vehicle. +Y axis may be set to point to the right of the vehicle, i.e. to a passenger side of a lefthand drive car, and -Y axis may be set to point to the left of the vehicle in an exemplary embodiment. +Z axis may be set to point to the upward direction, and -Z axis may be set to point to the downward direction. The magnetic center of a coil of the power transmission pad 21 or the power reception pad 11 may be defined as x=0 and y=0, and a ground surface may be defined as z=0.

FIG. 4 is a circuit diagram of an equivalent circuit of an electric vehicle wireless charging circuit according to an exemplary embodiment of the present disclosure.

A left portion of the circuit shown in FIG. 4 may be interpreted as a representation of all or part of a power supply Vsrc supplied from the power grid and a charging station 20 including the power transmission pad 21, and a right portion of the circuit shown in FIG. 4 may be interpreted as a representation of all or part of the electric vehicle including the power reception pad and the battery.

The left portion of the circuit shown in FIG. 4 may provide an output power Psrc corresponding to the power source Vsrc supplied from the power grid to a primary-side power converter. The primary-side power converter may perform a frequency-conversion and AC-DC or DC-to-AC conversion of the power Psrc to output a converted output power P1 to a transmission coil L1, so that the transmission coil L1 may generate an electromagnetic field at a desired operating frequency.

The primary-side power converter may include an AC-DC converter configured to convert the power Psrc which is an AC power supplied from the power grid into a DC power and a low-frequency (LF) converter configured to convert the DC power into an AC power having an operating frequency suitable for the wireless charging. For example, the operating frequency for the wireless charging may be determined to be in a frequency range 80-90 kHz, but is not limited thereto.

The power P1 output by the primary-side power converter may be supplied to a circuit including the transmission coil L1, a first capacitor C1, and a first resistor R1. In particular, a capacitance of the first capacitor C1 may be determined as a value establishing the operating frequency suitable for the wireless charging together with the transmission coil L1. The first resistor R1 may represent a power loss in the transmission coil L1 and the first capacitor C1.

Further, the transmission coil L1 may be electromagnetically coupled with a reception coil L2 by a coupling coefficient m so that a power P2 is transferred to the reception coil L2 or the power P2 is induced in the reception coil L2. Therefore, the meaning of power transfer in the present disclosure may be used interchangeably with the meaning of power induction.

The power P2 induced in or transferred to the reception coil L2 may be provided to a secondary-side power converter. Particularly, a capacitance of a second capacitor C2 may be determined as a value establishing the operating frequency suitable for the wireless charging together with the reception coil L2. A second resistor R2 may represent a power loss in the reception coil L2 and the second capacitor C2.

The secondary-side power converter may include an AC-DC converter configured to convert the supplied power P2 of the operating frequency to a DC power having a voltage level suitable for the battery VHV of the EV.

The electric power PHV converted from the power P2 supplied to the secondary-side power converter may be used for charging the battery VHV mounted inside the EV.

The right portion of the circuit shown in FIG. 4 may further include a switch for selectively connecting or disconnecting the reception coil L2 with the battery VHV.

Resonance frequencies of the transmission coil L1 and the reception coil L2 may be similar or identical to each other, and the reception coil L2 may be positioned in the electromagnetic field generated by the transmission coil L1.

It should be noted that the circuit of FIG. 4 is illustrative for the WPT in the EV WPT system used for exemplary embodiments of the present disclosure, and the present disclosure is not limited to the circuit illustrated in FIG. 4.

On the other hand, since the power loss may increase with a distance between the transmission coil L1 and the reception coil L2, it may be an important factor to set the relative positions of the transmission coil L1 and the reception coil L2 appropriately.

The transmission coil L1 may be included in the transmission pad 21 shown in FIG. 1, and the reception coil L2 may be included in the reception pad 11 shown in FIG. 1. Additionally, the transmission coil may be referred to as the primary coil or a ground assembly (GA) coil, and the reception coil may be referred to as the secondary coil or a vehicle assembly (VA) coil. Therefore, a positional alignment between the transmission pad and the reception pad or a positional alignment between the EV and the transmission pad may be an important factor also.

The positional alignment between the transmission pad 21 and the reception pad 11 in the electric vehicle 10 shown in FIG. 1 may correspond to the term "alignment" described above and therefore may be defined as the positional alignment between the SPC/GA and the EVPC/VA and is not limited to the positional alignment of the transmitting pad 21 and the reception pad 11.

The transmission pad 21 may be positioned below the ground surface, may be positioned on the ground surface, or may be positioned below the ground surface with its top surface being exposed over the ground surface. At this time, as shown in FIGS. 2 and 3, the x-axis may indicate the front-to-back direction of the vehicle, the y-axis may indicate the left--right direction of the vehicle, and the z-axis may indicate the up-and-down direction of the vehicle.

In addition, the reception pad 11 of the EV may be defined by different categories according to its height (defined in the z-direction) measured from the ground surface. For example, the reception pad 11 having a height of about 100-150 millimeters (mm) from the ground surface may be categorized into a class 1. The reception pad 11 having a height of about 140-210 mm may be categorized into a class 2. The reception pad 11 having a height of about 170-250 mm may be categorized into a class 3. The reception pad may support only some of the classes 1 through 3. For example, only the class 1 may be supported by the reception pad 11, or the class 1 and 2 may be supported by the reception pad 11.

The height of the reception pad measured from the ground surface may correspond to the previously defined term "vehicle magnetic ground clearance."

Meanwhile, a vertical position (i.e., position in the z-direction) of the power transmission pad 21 may be determined to be disposed between the maximum class and the minimum class supported by the power reception pad 11. For example, in case that the reception pad supports only the class 1 and 2, the vertical position of the power transmission pad 21 may be in a range between about 100 and 210 mm with respect to the power reception pad 11.

In addition, a gap between the center of the power transmission pad 21 and the center of the power reception pad 11 may be determined to be disposed within the limits of the horizontal and vertical directions (defined in the x- and y-directions). For example, the gap (e.g., Δy) may be determined to be within ±75 mm in a lateral direction (defined in the y-direction), and within ±100 mm in the longitudinal direction (defined in the x-direction).

The relative positions of the power transmission pad 21 and the power reception pad 11 may be varied in accordance with experimental results, and it should be noted that the numerical values mentioned above are provided as examples.

Although the alignment between the pads has been described above on the assumption that each of the transmission pad 21 and the reception pad 11 includes a coil, the alignment between the pads may be defined more specifically by an alignment between the transmission coil (or GA coil) and the reception coil (or VA coil) included in the transmission pad 21 and the reception pad 11, respectively.

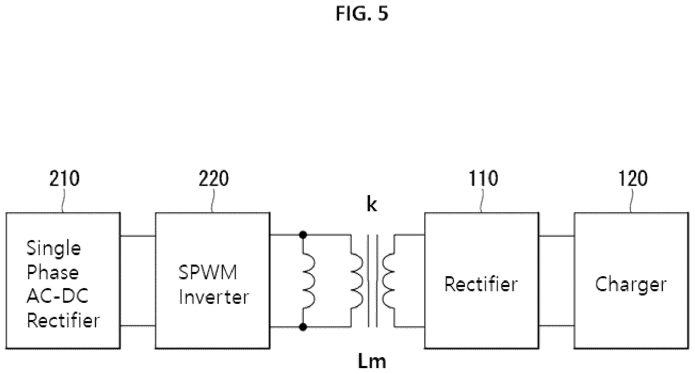

FIG. 5 shows an equivalent circuit of a single-phase to single-phase wireless power transfer (WPT) system according to an exemplary embodiment of the present disclosure.

A magnetic/inductive coupling or resonance structure formed between the primary coil and the secondary coil according to various embodiments of the present disclosure may be represented equivalently by a transformer shown in FIG. 5.

Referring to FIG. 5, a single-phase rectifier 210 and a sinusoidal pulse width modulation (SPWM) inverter 220 for applying an alternating current power to the primary coil may be disposed on a side of the primary coil.

In addition, a rectifier 110 and a charger 120 for transferring the power from the secondary coil 101C to the load or battery may be disposed on a side of the secondary coil.

The wireless power transfer system according to an exemplary embodiment of the present disclosure may include a power transfer circuit. The power transfer circuit shown in FIG. 5 may include a structure comprised of the single-phase rectifier 210 and the SPWM inverter 220 on the primary coil side as a technical feature.

The power transfer circuit according to an exemplary embodiment of the present disclosure shown in FIG. 5 may employ a proportional integral (PI) control scheme based on a measurement on the single-phase rectifier 210, as a technical feature, to control the single-phase rectifier 210 and the SPWM inverter 220 applying an alternating current power to the primary coil.

The SPWM inverter 220 may receive an output of the single-phase rectifier 210 and generate the alternating current power to supply the alternating current power as an output to the primary coil.

Meanwhile, an alternating current power rectified by the rectifier 110 may be supplied to the battery by the charger 120 to recharge the battery.

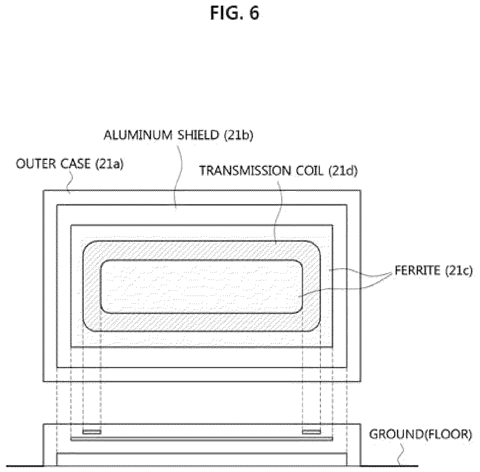

FIG. 6 is a conceptual cross sectional view and an elevation view of the power transmission pad 21 according to an exemplary embodiment of the present disclosure.

In FIG. 6, there is shown a transmission coil 21d that may be included in the transmission pad 21 in a device performing the wireless power transfer by a single-phase operation, for example, in the device shown in FIG. 5. The transmission pad 21 shown in FIG. 6 may support the single-phase operation mode. If the reception pad 11 includes the reception coil (not shown) having a shape corresponding to the transmission coil of FIG. 6, the reception pad 11 can perform the wireless power reception in the single-phase operation mode. The configuration of the coil and hardware of the reception pad 11 needed for the single-phase operation mode may be easily implemented by a person skilled in the art by modifying the transmission pad of FIG. 6, and detailed description thereof is omitted for simplicity.

Referring to FIG. 6, the power transmission pad 21 may include an outer case 21a forming an outer structure of the power transmission pad 21, an aluminum shield 21b having a shape of a planar plate and installed inside the outer case 21a, and a ferrite pad 21c installed on or above the aluminum shield 21b, and a transmission coil 21d installed on or above ferrite pad 21c. Here, "on or above" means an upward direction relative to the ground where the power transmission pad 21 is installed.

Here, the ferrite which is used for the ferrite pad 21c is a magnetic material containing iron oxide and can affect the wireless power transfer by reducing a magnetic resistance and facilitating a flow of magnetic flux.

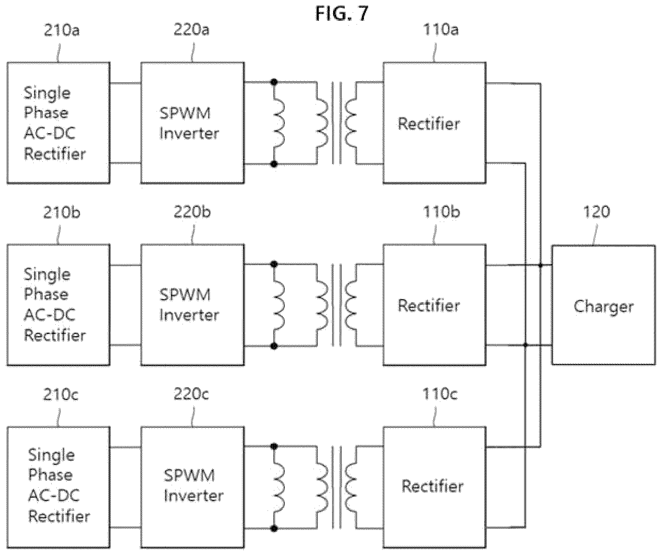

FIG. 7 shows an equivalent circuit of a three-phase to three-phase WPT system according to an exemplary embodiment of the present disclosure.

Referring to FIG. 7, each of the primary coil and the secondary coil may be implemented by a three-phase coil, and the WPT system may include, for each phase, a single-phase rectifier 210a-210c and a SPWM inverter 220a-220c for applying an AC power to the primary coil.

In addition, a rectifier 110a-110c may be disposed on the side of the secondary coil for each phase to transfer the power from the secondary coil to the load or battery through the charger 120.

The configuration of the single-phase rectifiers 210a-210c, the SPWM inverters 220a-220c, and the rectifiers 110a-110c shown in FIG 7 may be easily implemented by a person skilled in the art based on the single-phase rectifier 210, the SPWM inverter 220, and the rectifier 110, and detailed description thereof is omitted for simplicity.

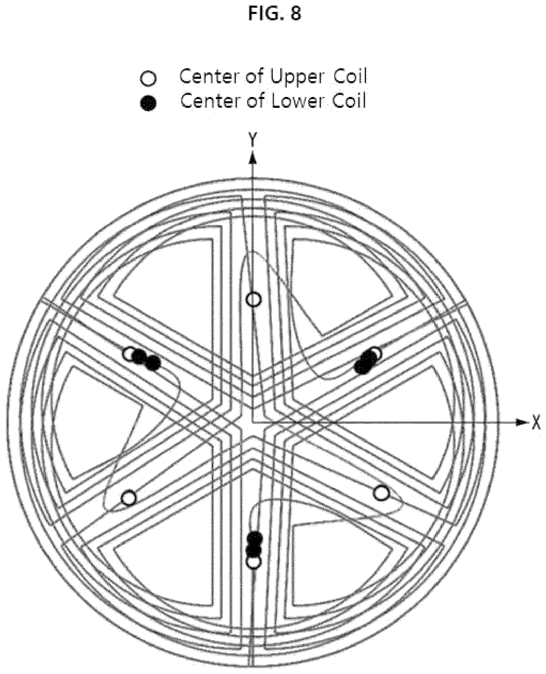

FIG. 8 is a conceptual top view of a power transmission coil and a power reception coil coupled to each other for a three-phase to three-phase power transfer operation according to an exemplary embodiment of the present disclosure.

The coils shown in FIG. 8 may include three upper coils and three lower coils, and each of the three upper coils may have a one-to-one correspondence with one of the lower coils. In general, the three upper coils may be wound in opposite directions to the three lower coils. As a result, the magnetic field formed by the three upper coils may be directed in opposite directions to the magnetic field formed by the three lower coils.

In case that the upper coils constitute the secondary coil, three-phase input voltages supplied to the lower coils with a certain phase difference therebetween may induce three-phase voltages in the secondary coil so that the wireless power transfer may be accomplished. In case that the input voltages are in-phase signals in the embodiment of FIG. 8, however, centers of the upper coils and the lower coils may be misaligned, so that the magnetic fields of the coils may not be efficiently coupled with each other and a magnetic field distribution may be formed as if the six coils were operating separately and independently. Further, while the magnetic field distribution may enable the wireless power transfer between the coils covering the same center point, the field distribution may make the wireless power transfer between the coils having different center points substantially impossible and does not provide a compatibility between the coils of the different center points.

In other words, the coil structure according to the exemplary embodiment of FIG. 8 may support the three-phase operation mode but may be apt to fail to support the single-phase operation mode.

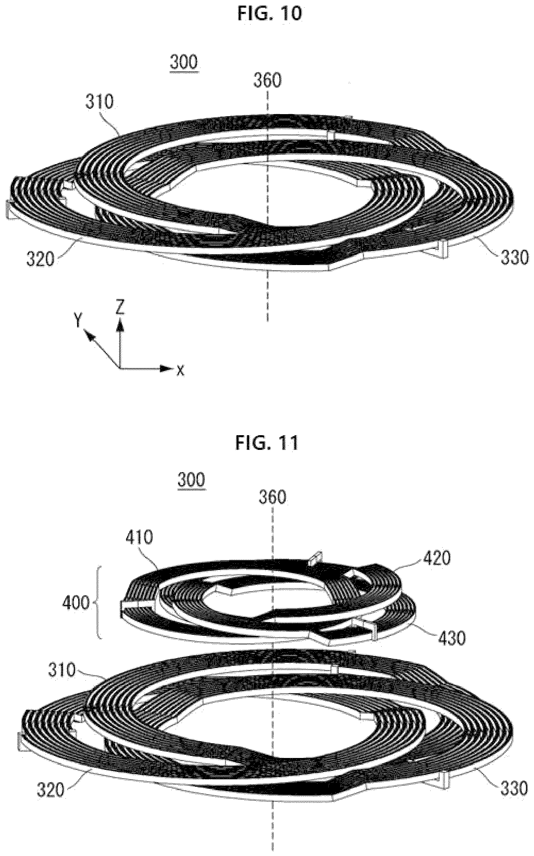

In an alternative embodiment of the present disclosure, one of the primary coil or the secondary coil may have a coil structure shown in FIG. 8 while the other coil may have a structure shown in FIGS. 10 and 11 which will be described below. Even in such a case, the wireless power transfer may be performed in three-phase operation mode when the input power is in the three-phase.

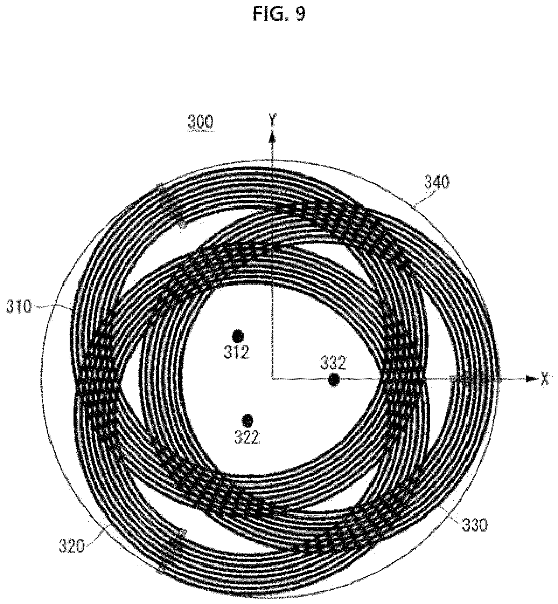

FIG. 9 is a conceptual top view of a coil structure 300 according to an exemplary embodiment of the present disclosure that may be used as the transmission coil and/or the reception coil for the wireless power transfer and compatible with the three-phase operation mode and the single-phase operation mode according to an exemplary embodiment of the present disclosure.

FIG. 10 is a conceptual perspective view of the coil device of FIG. 9.

Referring to FIGS. 9 and 10, the coil structure 300 includes three circular coils 310, 320, and 330 of the same size arranged to intersect each other. Distances of centers of the three circular coils 310, 320, and 330 from a central origin of the coil structure 300 are determined such that there is no point on the xy-plane at which all the three coils overlap together. That is, the circular coils are arranged such that a maximum of two coils (zero, one, or two of three) can overlap at any point on the xy-plane. Such an arrangement may maximize an area of the coil structure exposed to the top and increase an efficiency of the wireless power transfer.

In addition, the distances between the central origin of the coil structure 300 and the centers of the three circular coils 310, 320, and 330 may determine the magnetic field distribution formed by the coil structure 300. For example, the distances between the central origin of the coil structure 300 and the centers of the three circular coils 310, 320, and 330 may be set such that the magnetic field distribution formed by a synthesis of the magnetic fields generated by the coils when input power of the same phase is applied to the three circular coils may be the same as the magnetic field generated by one single-phase coil.

As a result, in case where one of the primary coil and the secondary coil has the coil structure shown in FIG. 9 and the other coil supports only the single-phase operation mode, the coil structure 300 according to an exemplary embodiment of the present disclosure may be used to provide the wireless power transfer of the single-phase operation mode.

Also, in case where both the primary coil and secondary coil have the coil structure shown in FIG. 9, the coil structure may be used to provide the wireless power transfer of the single-phase operation mode when the single-phase operation mode is advantageous in consideration of various conditions such as a charging capacity.

Meanwhile, when the coil structure 300 of FIG. 9 operates as a three-phase induction coil, the magnetic fields generated by each coil in the coil structure 300 of FIG. 9 and the other two coils out of phases may be combined to form a magnetic field being the same as a magnetic field generated by a conventional three-phase induction coil.

As a result, in case where one of the primary coil and the secondary coil has the coil structure shown in FIG. 9 and the other coil supports only the three-phase operation mode, the coil structure 300 according to an exemplary embodiment of the present disclosure may be used to provide the wireless power transfer of the three-phase operation mode.

Also, in case where both the primary coil and secondary coil have the coil structure shown in FIG. 9, the coil structure may be used to provide the wireless power transfer of the three-phase operation mode when the three-phase operation mode is advantageous in consideration of various conditions such as the charging capacity.

Therefore, when the coil structure 300 of FIG. 9 is to be used for at least one of the primary coil and the secondary coil, the coil structure 300 can be compatible with an existing single-phase coil or three-phase coil.

According to an exemplary embodiment of the present disclosure, manufacturers of the wireless power transfer system can reduce manufacturing costs of the system by unifying the shape of the wireless charging coil that had to be prepared in multiple numbers according to the charging capacity and/or the operation mode, and the operators of the wireless power transfer system can also reduce installation costs and maintenance costs of the system accordingly.

Exemplary embodiments of the present disclosure may contribute to an increase in the number of charging stations compatible with the user's EV regardless of the operation mode (single-phase or three-phase), thereby alleviating inconveniences of EV users who had to choose or find a charging station, reducing psychological resistances to the wireless charging, and lowering an entry barrier to purchase the electric vehicle.

According to an exemplary embodiment of the present disclosure, provided is a highly compatible transmission/reception coil device (having the structure shown FIGS. 9-10) that is compatible with a conventional coil device no matter on which side of the primary coil of the charging station and the secondary coil of the vehicle side the coil structure is installed.

According to an exemplary embodiment of the present disclosure, provided are a primary/secondary coil structure operable selectively in the single-phase operation mode and the three-phase operation mode based on the phase of the input power applied to the primary coil and in consideration of the charging capacity, and a wireless power transfer method using the coil structure.

According to an exemplary embodiment of the present disclosure, provided is a wireless power transfer device having an optimized arrangement of the novel coil structure and showing a high power transfer efficiency.

The wireless power transmission pad 21 according to an exemplary embodiment of the present disclosure, which is provided to transmit power wirelessly to the power reception pad 11 including the secondary coil, may include a first primary coil 310 arranged to surround a first center 312 near a reference point (for example, an origin point, or a center point of the guideline circle 340) in a virtual x-y plane within a central space; a second primary coil 320 arranged to surround a second center 322 near the reference point in the virtual x-y plane within the central space; a third primary coil 330 arranged to surround a third center 332 near the reference point in the virtual x-y plane within the central space; and a housing (not shown) supporting the first primary coil 310, the second primary coil 320, and the third primary coil 330. The first primary coil 310, the second primary coil 320, and the third primary coil 330 may be disposed such that a center of gravity of the first center 312, the second center 322, and the third center 332 is located at the reference point.

The first primary coil 310, the second primary coil 320, and the third primary coil 330 may be arranged within a virtual circle 340 centered on the central origin, which may serve as a design guideline 340.

That is, the design guideline 340 may be set as a circle having a diameter of Φ=750 mm, for example, and the first primary coil 310, the second primary coil 320, and the third primary coil 330 may be disposed within the circle of the design guide 340.

In the coil structure 300 according to an exemplary embodiment of the present disclosure, the centers 312, 322, and 332 of the first through third primary coils 310, 320, and 330 are concentrated in a central space within the circle of the design guide 340. The design guide 340 may facilitate the setting of such a structure of the coil structure 300.

The three centers 312, 322, and 332 of the first through third primary coils 310, 320, and 330 are spaced apart from each other. However, separation distances between the centers of several centimeters may be insignificantly small electrically at an operating frequency of the wireless power transfer, for example, 85 KHz. Thus, in case that input power of the same phase is applied to the primary coils 310, 320, and 330, the magnetic fields generated by the coils 310, 320, and 330, which are wound in the same direction and have the centers 312, 322, and 332 located close to the central origin of the coil structure 300, are constructively combined to form a magnetic field distribution that is almost the same as a magnetic field generated by a single coil according to the input power and may be used in the single-phase operation mode.

As mentioned above, the first primary coil 310, the second primary coil 320, and the third primary coil 330 are arranged such that a maximum of two coils can overlap in a z-axis direction at any point on the xy-plane passing through the first center 312, the second center 322, and the third center 332.

As the first primary coil 310, the second primary coil 320, and the third primary coil 330 are arranged in a maximum of two stages rather than three stages at any arbitrary point on the xy-plane, the coil structure 300 may have an increased exposure to the top.

Each of the first primary coil 310, the second primary coil 320, and the third primary coil 330 may be formed with a flat wire wound by at least one turn.

Referring to FIGS. 9 and 10, the coils 310, 320, and 330 may be made of flat wires. In particular, each of the coils 310, 320, and 330 may be implemented using a flat wire cable with a cross-sectional size of 5mm × 10mm which includes three flat wires with a cross-sectional size of 1mm × 10mm disposed in parallel to form three layers in order to facilitate heat dissipation and current flow.

In another exemplary embodiment of the present disclosure, the coils 310, 320, and 330 shown in FIGS. 9 and 10 may be implemented by litz wires.

Each of the first primary coil 310, the second primary coil 320, and the third primary coil 330 may be formed with a litz wire wound at least once.

The manufacturing costs of the coil structure 300 shown in FIGS. 9 and 10 may be lower than that of the general three-phase WPT coil shown in FIG. 8. Even when at least one of the flat wire and the litz wire is used, the manufacturing costs of the coil structure 300 may be lower than that of the general three-phase WPT coil shown in FIG. 8.

The first primary coil 310, the second primary coil 320, and the third primary coil 330 may be controlled to perform the single-phase operation or the three-phase operation based on the operation mode allowed in the secondary coil of the power reception pad 11.

If a combination of the ground assembly (GA) and the vehicle assembly (VA) includes the single-phase coil of FIG. 6 and the three-phase coil of FIG. 8, the single-phase coil and the three-phase coil may not be compatible to each other. Assuming that one of the two coils is the single-phase coil shown in FIG. 6, the coupling between the coils and the wireless power transfer must operate in the single-phase mode. However, if the other coil implemented by the three-phase coil of FIG. 8 is provided with the voltage of the same phase, each phase coil forms the magnetic field of opposite direction so that the magnetic fields formed by the phase coils are not constructively combined but canceled out.

Therefore, a user of the electric vehicle equipped with either the single-phase coil of FIG. 6 or the three-phase coil of FIG. 8 implemented according to the conventional structure has to find an EVSE that matches the operation mode of the coil structure mounted on the electric vehicle before positioning the electric vehicle and initiating the power transfer process.

Also, in a viewpoint of a charging service provider, the service provider operating EVSEs employing the conventional coils has to prepare the EVSE equipped with the single-phase coil structure of FIG. 6 and the EVSE equipped with the three-phase coil structure of FIG. 8 separately to provide the service.

According to an exemplary embodiment of the present disclosure, in case where the secondary coil mounted on the vehicle is equipped with the coil structure 300 shown in FIGS. 9 and 10 of the present disclosure, the electric vehicle can receive the power from the EVSE regardless of whether the EVSE provides the power in the single-phase operation mode or the three-phase operation mode. Thus, charging service provider needs not install the EVSE for each type and can reduce the installation costs.

According to an exemplary embodiment of the present disclosure, in case where the primary coil of the EVSE is equipped with the coil structure 300 shown in FIGS. 9 and 10 of the present disclosure, the EVSE may provide the vehicle with the electric power in the single-phase operation mode or the three-phase operation mode which is supported by the secondary coil mounted on the electric vehicle. Thus, the electric vehicle user may be relieved from burden of finding an EVSE that matches the operation mode of the coil structure mounted on the electric vehicle for the power transfer. Also, the charging service provider needs not install the EVSE for each type and can reduce the installation costs.

The first primary coil 310, the second primary coil 320, and the third primary coil 330 may be controlled to perform the single-phase operation or the three-phase operation depending on the phase differences of input power between the first through the third primary coils 310, 320, and 330.

The first primary coil 310, the second primary coil 320, and the third primary coil 330 may be controlled to perform the single-phase operation when the input power of the same phase is applied to each of the first through the third primary coils 310, 320, and 330.

The first primary coil 310, the second primary coil 320, and the third primary coil 330 may be controlled to perform the three-phase operation when the input powers having a certain phase difference are applied to each of the first through the third primary coils 310, 320, and 330.

When the secondary coil of the reception pad 11 according to an exemplary embodiment of the present disclosure includes a first secondary coil, a second secondary coil, and a third secondary coil, the first secondary coil, the second secondary coil, and the third secondary coil may be disposed such that a center of gravity of a fourth center of the first secondary coil, a fifth center of the second secondary coil, and a sixth center of the third secondary coil is located on a central axis 360 that is perpendicular to the xy-plane passing through the first center 312, the second center 322, and the third center 332 and passes through the reference point (for example, the origin point or the center point of the guideline circle 340 in the x-y plane).

The wireless power reception pad 11 according to an exemplary embodiment of the present disclosure, which is provided to receive power wirelessly from the power transmission pad 21 including the primary coil, may include the first secondary coil arranged to surround the fourth center near a central origin; the second secondary coil arranged to surround the fifth center near the central origin; the third secondary coil arranged to surround the sixth center near the central origin; and a housing supporting the first secondary coil, the second secondary coil, and the third secondary coil. The first secondary coil, the second secondary coil, and the third secondary coil may be disposed such that a center of gravity of the fourth center, the fifth center, and the sixth center is located at the central origin.

The first secondary coil, the second secondary coil, and the third secondary coil may be arranged within a virtual circle centered on the central origin and serving as a design guideline.

The first secondary coil, the second secondary coil, and the third secondary coil are arranged such that a maximum of two coils can overlap in the z-axis direction at any point on the xy-plane passing through the fourth center, the fifth center, and the sixth center.

Each of the first secondary coil, the second secondary coil, and the third secondary coil may be formed with a flat wire wound by at least one turn.

Each of the first secondary coil, the second secondary coil, and the third secondary coil may be formed with a litz wire wound by at least one turn.

Compared with a regular copper wire, the litz wire is advantageous in that the current flow does not become unstable with the increase in the current, losses are small so that a stable current flow may be maintained, and the temperature of the coil rises less. Therefore, the litz wire is an appropriate material for the electric vehicle wireless power transfer system using an operating frequency of 79 to 90 kHz. Generally, the price of the litz wire is set at a price per meter. There are attempts to use the litz wire in the electric vehicle wireless power transfer system taking such characteristics of the litz wire into account.

However, the wireless power transfer system for the light-duty electric vehicle requires the litz wire with a large current capacity (e.g., at least 50A or larger), which is dozens of times more expensive than a general litz wire and may cause an increase in the manufacturing cost of the electric vehicle.

Because the electric vehicle wireless charging system transfers large amounts of electric power wirelessly, strict heat management is always important. In addition, it is important to manage the heating of foreign objects such as metal.

However, due to the structure of the litz wire in which inner strands are surrounded by outer strands, it may be difficult to quickly discharge the generated heat to the outside of the litz wire. In addition, as the heat generation continues, the current loss in the litz wire increases. Therefore, it may be difficult to use the litz wire for a long period of time. As a result, the power transfer system using the litz wire needs a cooling arrangement, which increases the cost further.

Even if a cooling arrangement is added to the system, a thermal conductivity of the litz wire may be too low to quickly discharge the generated heat to the outside of the litz wire, and thus an overall cooling efficiency may be still low.

In addition, there may be some views to be considered that a supporting structure maintaining a shape of the coil made of the litz wire may impair the safety of the system.

Although the litz wire has a strength higher than the regular copper wire and facilitates to maintain a shape of the wire, the litz wire is linear-shaped, and a coil made of the litz wire may need a frame to maintain the shape of the litz wire and the coil. Such a frame is made of a dielectric with a low dielectric constant to reduce an electromagnetic influence on the operation of the coil. The dielectric with a low dielectric constant is generally vulnerable to heat, and thus is inadequate to use for a high-power charging at 22 Kilowatts (KW), for example, which generates a lot of heat. Additionally, because the frame is in contact with the litz wire, the frame may hinder a heat exchange, undergo a change in its shape during repeated heating and cooling processes, or cause a fire.

Therefore, the present disclosure provides an alternative example in addition to the example using the litz wire. The wireless power transmission pad or the power reception pad according to an embodiment of the present disclosure may be implemented using a flat wire.

The flat and rectangular wire according to an exemplary embodiment of the present disclosure may be a modification of a commercially available flat wire to adapt to the purpose of the present disclosure.

Flat wires available on the market generally have corners that are almost right-angled. These commercially available flat wires are used to increase a space factor. A wire according to an alternative example of the present disclosure maintains its flat shape has corners that are at least partially rounded.

The wire proposed by the present disclosure has characteristics of 1) having a flat or planar shape, and 2) having sides that are partially round and/or partially rectangular. The wire according to the example of the present disclosure having such characteristics, in a state of being wound in a coil, may be a flat wire having a shape optimized to generate an electromagnetic field suitable for the wireless power transfer.

Flat and rectangular wires may be available in various sizes, for example, single or multiple strands (e.g., eight strands), thickness ranges of 1.0-1.9 millimeters (mm), and widths ranges of 3-20 mm. In addition, the rectangular wire can be wound into a coil of a continuously transposed conductor (CTC) form.

The advantage of the coil made of such a wire is that it can be used for a high voltage application, and the conductor adhesion of insulating material to the conductor is excellent enough to select and use one of diverse insulating materials such as KRAFT, THERMAL UPGRADE KRAFT, NOMEX, DENNISON, KAPTON, MICA, and CONDUCTOFOL.

If an insulation issue is solved in this way, the number of turns may be increased compared to the existing the litz wire coil, and an increase in the number of turns may enable to establish an increased magnetic flux and enhance a power transfer efficiency.

In addition, because it is essentially a single cylindrical metal structure when observed from outside, heat may be transferred quickly from the inside to the outside without any discontinuities.

Further, the litz wire has a structure that inner strands are surrounded by outer strands as mentioned above. Thus, when an internal short circuit or insulation deformation or deterioration occurs, it may be difficult to identify a location of a trouble, and partial maintenance of the wire may be impossible and the entire coil has to be replaced, which leads to an increase in maintenance costs. However, the coil structure employing the flat wire or the planar wire proposed in the present disclosure is more durable than the litz wire, and thus the troubles such as the short circuit in the wire are less likely to occur. Further, even if a trouble occurs, the location where the trouble occurred may be identified easily. Therefore, it may be possible to immediately fix the trouble, and even if the coil itself is replaced, the replacement cost is low. As a consequence, the coil structure according to the present disclosure requires much less resources for the maintenance.

In addition, the use of the flat wire structure has the advantage of a high heat transfer efficiency as well as a high freedom of arrangement, which enables to selectively apply various cooling techniques such as dry self-cooling, dry wind cooling, dry sealed self-cooling, inflow self-cooling, inflow wind cooling, inflow wind cooling, oil-flowing water cooling, oil-flowing wind cooling, and refrigerant cooling. Since various cooling techniques may be applied selectively or in combination, embodiment(s) of the present disclosure can have a very advantageous effect in cooling the heat generated during the power transfer.

The flat wire according to an exemplary embodiment of the present disclosure may be implemented using at least one material selected from copper and copper alloy, but the scope of the present disclosure is not limited thereto, and various conductors may be used for the flat wire as well.

Meanwhile, it may be advantageous for establishing an electromagnetic field near the coils to round the corners of the coil at least partially. A curvature at which the corners are rounded may also be determined taking into account the power transfer efficiency, the shape of the coil, and so on.

In an example, the coil structure 300 according to the present disclosure may be implemented, based on a shape and material of a bus bar forming a conductor connected to the battery inside the electric vehicle 10, by determining an aspect ratio of a cross section of the wire and a numerical range of a curvature of the rounded corner.

Comparing the example employing the litz wire with the alternative example, although the litz wire is a technology designed to increase the ratio of surface area i.e., current path, to the cross sectional area or volume, interferences between the strands of the litz wire in a central space of the litz wire bundles where the strands are dense may reduce the power transfer efficiency and increase the generation of heat.

Since the current flows through a surface of the conductor, the ratio of the surface area to the cross sectional area may be understood to correspond to the ratio of the current path to the total volume.

Examples of the present disclosure may increase the ratio of the surface area to the cross sectional area and improve the space factor by proposing the coil structure using the flat wire, thereby improving the power transfer efficiency.

The rounded corners may contribute to the formation of electromagnetic fields, resulting in more advantageous electromagnetic characteristics of the coil.

FIG. 11 is a conceptual perspective view of the transmission coil and the reception coil coupled to each other and compatible with the three-phase operation mode and the single-phase operation mode for the power transfer according to an exemplary embodiment of the present disclosure.

Referring to FIG. 11, when the secondary coil 400 of the reception pad 11 includes the first secondary coil 410, the second secondary coil 420, and the third secondary coil 430, the first secondary coil 410, the second secondary coil 420, and the third secondary coil 430 may be disposed such that the center of gravity of the fourth center of the first secondary coil 410, the fifth center of the second secondary coil 420, and the sixth center of the third secondary coil 430 is located on the central axis 360 that is perpendicular to the xy-plane passing through the first center 312, the second center 322, and the third center 332 of the primary coil 300 and passes through the reference point (for example, the origin point or the center point of the guideline circle 340 in the x-y plane).

That is, in the example of FIG. 11 in which both the primary coil 300 and the secondary coil 400 includes the coil structure of the present disclosure, both the center of gravity of the centers of the primary coil 300 and the center of gravity of the centers of the secondary coil 400 are located on the common central axis 360 so as to enhance a power transfer efficiency.

Alternatively, however, the center of gravity of the centers 312, 322, and 332 of the three coils 310, 320, and 330 in the primary coil 300 (hereinbelow, referred to as "primary side center of gravity") and the center of gravity of the centers of the three coils 410, 420, and 430 in the secondary coil 400 (hereinbelow, referred to as "secondary side center of gravity") do not necessarily coincide in the xy-plane. Even if the x- and y-coordinates of the primary side center of gravity and the secondary side center of gravity do not coincide, the power may be transferred from the primary coil 300 to the secondary coil 400. However, it may be desirable that the primary side center of gravity and the secondary side center of gravity are aligned in the xy-plane to each other since a severe misalignment of the centers of gravity may significantly reduce the efficiency of the wireless power transfer.

In addition, in order to ensure that the wireless power transfer can be performed with a desired efficiency, it may be recommended that a deviation in the x- and y- coordinates between the primary side center of gravity and the secondary side center of gravity be within a predetermined tolerance.

Although the above description was focused on the examples having the flat ferrite structure, it will be apparent to those skilled in the art that embodiments in which a ferrite core is formed in the central space of the coil are within the scope of the present disclosure.

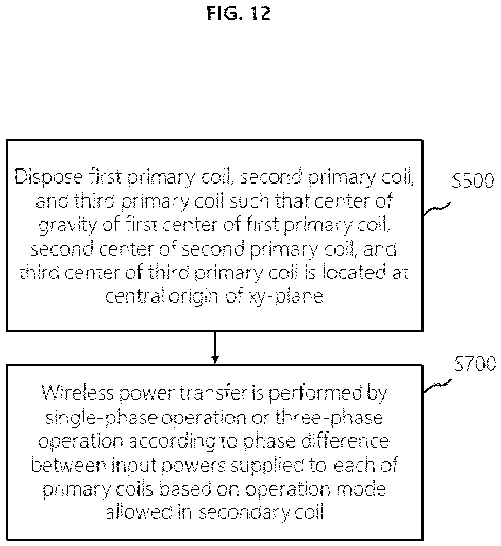

FIG. 12 is a flowchart conceptually illustrating a wireless power transfer method according to an exemplary embodiment of the present disclosure. The wireless power transfer method shown in FIG. 12 may correspond to the embodiment of FIGS. 9 and 10.

Referring to FIG. 12, the wireless power transfer method according to an exemplary embodiment of the present disclosure is a method of transferring the power wirelessly from the transmission pad 21 including the primary coil to the reception pad 11 including the secondary coil. The wireless power transfer method may include: an operation S500 of providing the first primary coil 310 arranged to surround the first center 312 near the reference point (for example, the origin point or the center point of the guideline circle 340 in the x-y plane) in the central space, the second primary coil 320 arranged to surround the second center 322 near the reference point in the central space, and the third primary coil 330 arranged to surround the third center 332 near the reference point in the central space such that the center of gravity of the first center 312, the second center 322, and the third center is located at the origin; and an operation S700 of controlling supply of input powers to the first primary coil 310, the second primary coil 320, and the third primary coil 330 to enable the wireless power transfer to the reception pad 11 by the single-phase operation or the three-phase operation.

Before the operation S700 of controlling the supply of the input powers to enable the wireless power transfer to the reception pad 11, an operation of identifying the operation mode allowed in the secondary coil may be performed additionally.

In the operation S700 of controlling the supply of the input powers to enable the wireless power transfer to the reception pad 11, the first primary coil 310 and the second primary coil 320 may be controlled to perform the single-phase operation or the three-phase operation based on the operation mode allowed in the secondary coil of the power reception pad 11.

In case that the operation mode allowed in the secondary coil 400 is identified to be the single-phase operation mode, the input powers of the same phase may be controlled to be supplied to the first primary coil 310, the second primary coil 320, and the third primary coil 330 in the operation S700, so that the wireless power transfer to the reception pad 11 is performed by the single-phase operation.

In case that the operation mode allowed in the secondary coil 400 is identified to be the three-phase operation mode, the input powers having certain phase differences from each other may be controlled to be supplied to respective one of the first primary coil 310, the second primary coil 320, and the third primary coil 330 in the operation S700, so that the wireless power transfer to the reception pad 11 is performed by the three-phase operation.

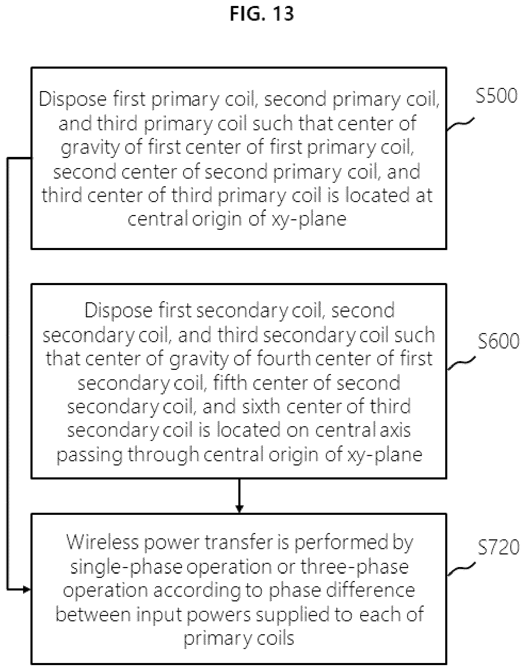

FIG. 13 is a flowchart conceptually illustrating a wireless power transfer method according to another exemplary embodiment of the present disclosure. The wireless power transfer method shown in FIG. 13 may correspond to the embodiment of FIG. 11. The operation S500 in FIG. 13 may be the same as that shown in FIG. 12, and detailed description thereof will be omitted for simplicity.

Referring to FIG. 13, when the secondary coil 400 of the reception pad 11 includes the first secondary coil 410, the second secondary coil 420, and the third secondary coil 430, the wireless power transfer method according to the present embodiment may further include an operation S600 of providing the first secondary coil 410, the second secondary coil 420, and the third secondary coil 430 such that the center of gravity of the fourth center of the first secondary coil 410, the fifth center of the second secondary coil 420, and the sixth center of the third secondary coil 430 is located on the central axis 360 that is perpendicular to the xy-plane passing through the first center 312, the second center 322, and the third center 332 of the primary coil 300 and passes through the reference point.

The wireless power transfer method according to an exemplary embodiment shown in FIG. 13 may include an operation S720 of controlling supply of input powers to the first primary coil 310, the second primary coil 320, and the third primary coil 330 to enable the wireless power transfer to the reception pad 11 by the single-phase operation or the three-phase operation.

Before the operation S720 of controlling the supply of the input powers to enable the wireless power transfer to the reception pad 11, an operation of determining the operation mode for the wireless power transfer may be performed additionally.

In the embodiments of FIGS. 11 and 13, the wireless power transfer method allows both the three-phase operation mode and the single-phase operation mode, and thus the operation mode may be determined in consideration of the charging capacity and the charging time.

The electric vehicle charging service provider may provide the charging service according to a service model related to a relationship between the charging capacity and/or the charging time with the operation mode according to an exemplary embodiment of the present disclosure.

For example, the charging service provider may provide the charging service in the single-phase operation mode under a charging power condition of 22kW or lower while providing the service in the three-phase operation mode under a condition of 22kW or higher. Though the single-phase operation mode may be preferable under the condition of 22kW or lower, the three-phase operation mode may be used under that condition alternatively. Meanwhile, the power level of 22kW is just an exemplary criterion, and another guideline may be used according to various conditions.

If it is assumed that the three-phase operation mode can allow fast charging services at thus shorten the charging time, a charging service user may sign up for the service by choosing an operation mode preferred by the user between the three-phase operation mode and the single-phase operation mode. For example, a user who usually prefers the fast charging to finish the charging in a short period of time may be provided with a service with an option that the three-phase operation mode is applied by default or preferentially under a condition where the three-phase operation mode is applicable. Meanwhile, a user who is not limited by the charging time (e.g., a user usually charging the vehicle overnight in a parking lot) may subscribe to the service with an option that the single-phase operation mode is applied by default or preferentially.

In an example of the charging service, the single-phase operation mode may be provided by default in case that the user did not choose one of the operation modes while the three-phase operation mode may be provided when the user exercises a right to use the three-phase operation mode.

In the operation S720 of controlling the supply of the input powers to enable the wireless power transfer to the reception pad 11, the first primary coil 310 and the second primary coil 320 may be controlled to perform the single-phase operation or the three-phase operation based on a determined operation mode.

In case that the operation mode determined for the wireless power transfer is the single-phase operation mode, the input powers of the same phase may be controlled to be supplied to the first primary coil 310, the second primary coil 320, and the third primary coil 330 in the operation S720, so that the wireless power transfer to the reception pad 11 is performed by the single-phase operation.

In case that the operation mode determined for the wireless power transfer is the three-phase operation mode, the input powers having certain phase differences from each other may be controlled to be supplied to respective one of the first primary coil 310, the second primary coil 320, and the third primary coil 330 in the operation S720, so that the wireless power transfer to the reception pad 11 is performed by the three-phase operation.

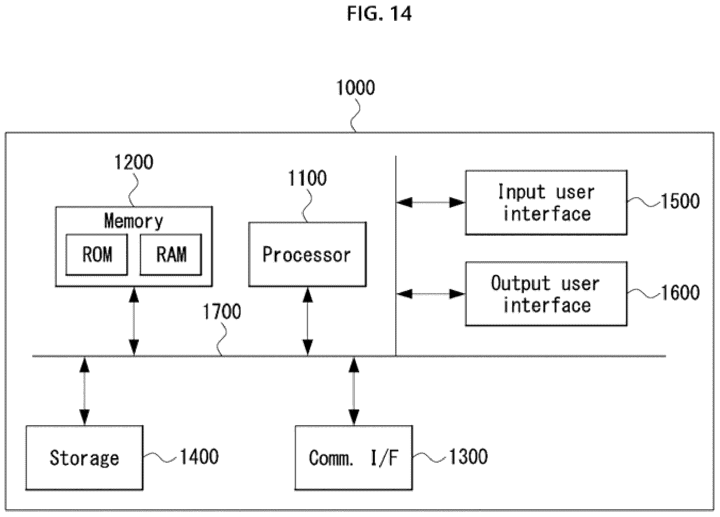

FIG. 14 is a block diagram illustrating a generalized configuration of hardware included in the wireless power transmission pad and/or the wireless power reception pad or associated with the wireless power transmission pad and/or the wireless power reception pad to control a sequence for the wireless power transfer.

For convenience of explanation, the hardware controlling the sequence for the wireless power transfer may be referred to as a controller 1000.

The controller 1000 may be disposed on a side of the electric vehicle 100, on a side of the electric vehicle supply equipment (EVSE), or on a side of the power transmission device or pad 210.

The controller 1000 may include at least one processor 1100, a memory 1200 storing at least one instruction for performing the operations described above through the processor 1100, and a communication interface 1300 connected to a network to perform communications. The controller 1000 for wireless power transfer may further include a storage device 1400 capable of storing the at least one instruction for performing the operations described above or data generated during the execution of the instruction. The controller 1000 for wireless power transfer may further include an input interface 1500 and an output interface 1600 for interactions with a user. The components of the controller 1000 for wireless power transfer may be connected to each other by a system bus 3700 to communicate with each other.

The controller or computing system 1000 according to an embodiment of the present disclosure may include at least one processor 1100 and the memory 1200 storing program instructions instructing the at least one processor 1100 to perform at least one process step. At least some of the operations or process steps of the method according to an embodiment of the present disclosure may be performed by the at least one processor 1100 loading and executing the program instructions from the memory 1200.

The processor 1100 may include a central processing unit (CPU) or a graphics processing unit (GPU) or may be implemented by another kind of dedicated processor suitable for performing the method of the present disclosure.

Each of the memory 1200 and the storage device 1400 may be comprised of at least one of a volatile storage medium and a non-volatile storage medium. For example, the memory 1200 may be comprised of at least one of a read only memory (ROM) and a random access memory (RAM).

Here, the at least one instruction may include at least one of: a sequence suitable for identifying at least one of the electric vehicle 10, the electric vehicle supply equipment (EVSE) 20, and the power transmission pad 21, a sequence suitable for associating two or more devices among the electric vehicle 10, the electric vehicle supply equipment (EVSE) 20, the power transmission pad 21 through wireless communications, a sequence suitable for performing the alignment and/or the pairing through a positioning of a counterpart device, and a sequence suitable for allowing to supply an alternating current power for the power transfer after the alignment and/or the pairing.

Additionally, the controller 1000 may include the communication interface 1300 that performs communications through a wireless communication network.

Additionally, the controller 1000 may further include the storage device 1400, the input interface 1500, and the output interface 1600.

The components of the controller 1000 may be connected to each other by the system bus 1700 to communicate with each other.

The controller 1000 according to an exemplary embodiment of the present disclosure may be any data processing device capable of communications through a network such as a desktop computer, a laptop computer, a notebook PC, a smartphone, a tablet PC, a mobile phone, a smart watch, smart glasses, an e-book reader, a portable multimedia player (PMP), a portable game console, a navigation device, a digital camera, a digital multimedia broadcasting (DMB) player, a digital audio recorder, a digital audio player, a digital video recorder, a digital video player, and a personal digital assistant (PDA). The device and method according to exemplary embodiments of the present disclosure can be implemented by computer-readable program codes or instructions stored on a computer-readable intangible recording medium. The computer-readable recording medium includes all types of recording device storing data which can be read by a computer system. The computer-readable recording medium may be distributed over computer systems connected through a network so that the computer-readable program or codes may be stored and executed in a distributed manner.

The computer-readable recording medium may include a hardware device specially configured to store and execute program instructions, such as a ROM, RAM, and flash memory. The program instructions may include not only machine language codes generated by a compiler, but also high-level language codes executable by a computer using an interpreter or the like.

Some aspects of the present disclosure described above in the context of the device may indicate corresponding descriptions of the method according to the present disclosure, and the blocks or devices may correspond to operations of the method or features of the operations. Similarly, some aspects described in the context of the method may be expressed by features of blocks, items, or devices corresponding thereto. Some or all of the operations of the method may be performed by (or using) a hardware device such as a microprocessor, a programmable computer, or electronic circuits, for example. In some exemplary embodiments, one or more of the most important operations of the method may be performed by such a device.

In some exemplary embodiments, a programmable logic device such as a field-programmable gate array may be used to perform some or all of functions of the methods described herein. In some exemplary embodiments, the field-programmable gate array may be operated with a microprocessor to perform one of the methods described herein. In general, the methods are preferably performed by a certain hardware device.

The description of the disclosure may be merely exemplary in nature and, thus, variations that do not depart from the substance of the disclosure may be intended to be within the scope of the disclosure. Such variations may not be to be regarded as a departure from the spirit and scope of the disclosure. Thus, it will be understood by those of ordinary skill in the art that various changes in form and details may be made without departing from the spirit and scope as defined by the following claims.

## Claims

1. A wireless power transmission pad configured to transmit electric power wirelessly to a power reception pad that comprises a secondary coil, comprising:
a first primary coil arranged to surround a first center near a reference point in a central space;
a second primary coil arranged to surround a second center near the reference point in the central space;
a third primary coil arranged to surround a third center near the reference point in the central space; and
a housing configured to support the first primary coil, the second primary coil, and the third primary coil,
wherein the first primary coil, the second primary coil, and the third primary coil are disposed such that a center of gravity of the first center, the second center, and the third center is located at the reference point.

2. The wireless power transmission pad as claimed in claim 1, wherein the first primary coil, the second primary coil, and the third primary coil are arranged within a circle centered on the reference point and serving as a design guideline.

3. The wireless power transmission pad as claimed in claim 1, wherein the first primary coil, the second primary coil, and the third primary coil are arranged such that a maximum of two coils overlap in a z-axis direction at any point on a xy-plane passing through the first center, the second center, and the third center.

4. The wireless power transmission pad as claimed in claim 1, wherein each of the first primary coil, the second primary coil, and the third primary coil is formed with a flat wire wound by at least one turn.

5. The wireless power transmission pad as claimed in claim 1, wherein each of the first primary coil, the second primary coil, and the third primary coil is formed with a litz wire wound by at least one turn.

6. The wireless power transmission pad as claimed in claim 1, wherein the first primary coil, the second primary coil, and the third primary coil are controlled to perform a single-phase operation or a three-phase operation depending on phase differences of input power between the first through the third primary coils.

7. The wireless power transmission pad as claimed in claim 6, wherein the first primary coil, the second primary coil, and the third primary coil are controlled to perform the single-phase operation when input power of a same phase is applied to each of the first through the third primary coils.

8. The wireless power transmission pad as claimed in claim 6, wherein the first primary coil, the second primary coil, and the third primary coil are controlled to perform the three-phase operation input powers having a certain phase difference are applied to each of the first through the third primary coils.

9. The wireless power transmission pad as claimed in claim 1, wherein the first primary coil, the second primary coil, and the third primary coil are controlled to perform a single-phase operation or a three-phase operation based on an operation mode allowed in the secondary coil of the power reception pad.

10. The wireless power transmission pad as claimed in claim 1, wherein, when the secondary coil of the power reception pad comprises a first secondary coil, a second secondary coil, and a third secondary coil, the first secondary coil, the second secondary coil, and the third secondary coil are disposed such that a center of gravity of a fourth center of the first secondary coil, a fifth center of the second secondary coil, and a sixth center of the third secondary coil is located on a central axis that is perpendicular to a xy-plane passing through the first center, the second center, and the third center and passes through the reference point.

11. A wireless power reception pad configured to receive electric power wirelessly from a power transmission pad that comprises a primary coil, comprising:
a first secondary coil arranged to surround a fourth center near a reference point in a central space;
a second secondary coil arranged to surround the fifth center near the reference point in the central space;
a third secondary coil arranged to surround the sixth center near the reference point in the central space; and
a housing configured to support the first secondary coil, the second secondary coil, and the third secondary coil,
wherein the first secondary coil, the second secondary coil, and the third secondary coil are disposed such that a center of gravity of the fourth center, the fifth center, and the sixth center is located at the reference point.

12. The wireless power reception pad as claimed in claim 11, wherein the first secondary coil, the second secondary coil, and the third secondary coil are arranged within a circle centered on the reference point and serving as a design guideline.

13. The wireless power reception pad as claimed in claim 11, wherein the first secondary coil, the second secondary coil, and the third secondary coil are arranged such that a maximum of two coils overlap in a z-axis direction at any point on a xy-plane passing through the fourth center, the fifth center, and the sixth center.

14. The wireless power reception pad as claimed in claim 11, wherein each of the first secondary coil, the second secondary coil, and the third secondary coil is formed with a flat wire wound by at least one turn.

15. The wireless power reception pad as claimed in claim 11, wherein each of the first secondary coil, the second secondary coil, and the third secondary coil is formed with a litz wire wound by at least one turn.

16. A method of transferring electric power wirelessly from a transmission pad comprising a primary coil to a power reception pad that comprises a secondary coil, the method comprising:
providing a first primary coil arranged to surround a first center near a reference point in a central space, a second primary coil arranged to surround a second center near the reference point in the central space, and a third primary coil arranged to surround a third center near the reference point in the central space such that a center of gravity of the first center, the second center, and the third center is located at the origin; and
controlling supply of input powers to the first primary coil, the second primary coil, and the third primary coil to enable a wireless power transfer to the power reception pad by a single-phase operation or a three-phase operation.

17. The method of claim 16, wherein controlling supply of input powers comprises:
enabling input powers of a same phase to be supplied to the first primary coil, the second primary coil, and the third primary coil, so that the wireless power transfer to the power reception pad is performed by the single-phase operation.

18. The method of claim 16, wherein controlling supply of input powers comprises:
enabling input powers having certain phase differences from each other to be supplied to respective one of the first primary coil, the second primary coil, and the third primary coil, so that the wireless power transfer to the power reception pad is performed by the three-phase operation.

19. The method of claim 16, wherein, in the operation of controlling the supply of the input powers, the supply of the input powers is controlled such that the first primary coil, the second primary coil, and the third primary coil perform the wireless power transfer to the power reception pad by the single-phase operation or the three-phase operation based on an operation mode allowed in the secondary coil of the power reception pad.

20. The method of claim 16, when the secondary coil of the power reception pad comprises the first secondary coil, the second secondary coil, and the third secondary coil, the method further comprises:
providing a first secondary coil, a second secondary coil, and a third secondary coil such that a center of gravity of a fourth center of the first secondary coil, a fifth center of the second secondary coil, and a sixth center of the third secondary coil is located on a central axis that is perpendicular to a xy-plane passing through the first center, the second center, and the third center and passes through the reference point.
